# EUROPÄISCHE PATENTSCHRIFT

(11) **EP 1 452 002 B1**
(45) Veröffentlichungstag und Bekanntmachung des Hinweises auf die Patenterteilung: **05.03.2008**
(21) Anmeldenummer: 02805254.6
(22) Anmeldetag: 03.12.2002
(51) Int. Cl.: H04L 29/08, H04L 12/28

(54) **VERFAHREN UND SYSTEM ZUR ÜBERTRAGUNG VON NICHT EXPLIZIT ANGEFORDERTEN DATEN IN EINEM MOBILFUNKSYSTEM**
METHOD AND SYSTEM FOR THE TRANSMISSION OF DATA THAT HAS NOT BEEN EXPLICITLY REQUESTED IN A MOBILE RADIO SYSTEM
PROCEDE ET SYSTEME DE TRANSMISSION DE DONNEES DEMANDEES DE FACON NON EXPLICITE DANS UN SYSTEME DE RADIOTELEPHONIE MOBILE

(30) Priorität: 07.12.2001 DE 10160077
(43) Veröffentlichungstag der Anmeldung: 01.09.2004
(73) Patentinhaber: SIEMENS AKTIENGESELLSCHAFT, 80333 München (DE)
(72) Erfinder: BINAR, Simon, 82110 Germering (DE)
(86) Internationale Anmeldenummer: PCT/DE2002/004423
(87) Internationale Veröffentlichungsnummer: WO 2003/055177

(56) Entgegenhaltungen:
- WO-A-01/31946
- WO-A-01/43390
- WO-A-01/82638
- WAP FORUM: "Push OTA Protocol Version 25-04-2001" WAP FORUM SPECIFICATIONS, [Online] 25. April 2001 (2001-04-25), Seiten 1-44, XP002240864 Gefunden im Internet: <URL:http://www1.wapforum.org/tech/terms.a sp?doc=WAP-235-PushOTA-20010425-a.pdf> [gefunden am 2003-05-13]

## Beschreibung

Die Erfindung betrifft ein System und ein Verfahren zur Übertragung von nicht explizit angeforderten Daten in einem Mobilfunksystem.

Der Austausch von Informationen, wie zum Beispiel Daten oder Multimediainhalten, in auf Paketübertragung basierenden Mobilfunknetzen wird immer umfangreicher. Da das Abfragen von Informationen über die Tastatur eines Mobilfunkgeräts nicht besonders komfortabel ist, besteht die Möglichkeit, die gewünschten Informationen über sogenannte Push-Services abzufragen. Dabei werden Informationen von einem Server automatisch an das Mobilfunkgerät geliefert, ohne dass dieses explizit die spezifischen Daten abgefragt hat.

Typischerweise gibt der Mobilfunknutzer eine Gruppe von Themen oder einen Oberbegriff von Informationen an, nach welchem er dann die gewünschten Informationen auf sein Mobilfunkgerät geliefert bekommt. Technisch gesehen sind Push-Services netzwerkinitiierte Punkt-zu-Punkt-Dienstleistungen.

Der grundlegende Aufbau eines möglichen Push-Service-Systems wird in der TR 23.974 Spezifikation der 3GPP (3rd Generation Partnership Project)- Organisation beschrieben.

Probleme ergeben sich jedoch dadurch, da die mit Hilfe des Push-Services übermittelten Informationen nicht auf eine konkrete Anfrage des Mobilfunknutzers an diesen geliefert werden. Mobilfunkgeräte haben nur eine begrenzte Speicherkapazität für eingehende Informationen. Aus diesem Grund können sich Probleme ergeben, da dem Sender der Informationen nicht bekannt ist, ob er die Informationen noch an das Mobilfunkgerät senden kann.

Eingehende Informationen werden durch das Mobilfunkgerät meist mit Hilfe eines akustischen Signals angezeigt. Sollten fortlaufend Informationen in dem Mobilfunkgerät eingehen, so stellt dies eine Belästigung für den Mobilfunkteilnehmer dar. Aus diesem Grund ist es wünschenswert, eine Möglichkeit für den Empfang von Push-Services zu finden, bei dem der Nutzer dieses Dienstes nicht ständig durch eingehende Nachrichten gestört wird.

Des Weiteren besteht bei bekannten Push-Services das Problem, dass bei einer großen Menge von empfangenen Daten der Benutzer Schwierigkeiten hat zu entscheiden, welche Daten für ihn wichtig sind und welche er nur als für ihn weniger wichtige Informationen erhalten hat. Aus diesem Grund ist es für den Nutzer der Push-Services wünschenswert, die Daten entsprechend der Wichtigkeit zugesandt zu bekommen.

Der vorliegenden Erfindung liegt die Aufgabe zugrunde, ein verbessertes System zur Übertragung von nicht explizit angeforderten Daten in einem Mobilfunksystem bereitzustellen.

Diese Aufgabe wird erfindungsgemäß durch ein Übertragungssystem mit den Merkmalen von Anspruch 1 bzw. durch ein Ubertragungsverfahren mit den Merkmalen von Anspruch 7 gelöst. Bevorzugte Ausführungsformen ergeben sich aus den abhängigen Ansprüchen.

Das erfindungsgemäße System zur Übertragung von nicht explizit angeforderten Daten in einem Mobilfünksystem weist einen Anwendungsrechner, ein Übertragungsnetzwerk und ein Mobilfunkgerät auf. Der Anwendungsrechner kann zum Beispiel ein Applicationserver sein, welcher die Push-Services über ein Übertragungsnetzwerk, zum Beispiel eine Internet-Protokoll-Verbindung, an das Mobilfunkgerät sendet.

Das Übertragungsnetzwerk ist ein Netzwerk, welches die Verbindung zwischen dem Anwendungsrechner und dem Mobilfunkgerät ermöglicht. Das Übertragungsnetzwerk kann zum Beispiel ein GPRS (General Packet Radio Service) Netzwerk sein.

Das.Mobilfunkgerät ist ein Endgerät, welches die Anwendung von Push-Services unterstützt.

Sollen Informationen von dem Anwendungsrechner an das Mobilfunkgerät weitergeleitet werden, so macht das nur Sinn, wenn das Übertragungsnetzwerk weiß, wie viel Speicherplatz dem Mobilfunkgerät zur Speicherung von Push-Service-Informationen zur Verfügung steht. Aus diesem Grund teilt das Mobilfunkgerät dem Übertragungsnetzwerk mit, wie viel Speicherplatz ihm zum Speichern der Push-Services noch zur Verfügung steht.

In einer bevorzugten Ausführungsform der vorliegenden Erfindung teilt das Mobilfunkgerät dem Übertragungsnetzwerk des Weiteren mit, wenn kein Speicherplatz mehr für Daten in dem Mobilfunkgerät zur Verfügung steht.

Sollte dennoch das Bedürfnis bestehen, Informationen an das Mobilfunkgerät zu senden, obwohl kein Speicherbereich in dem Mobilfunkgerät mehr zur Verfügung steht, so gibt es grundsätzlich zwei Möglichkeiten. Zum Einen können nicht gesendete Informationen zwischengespeichert werden. Sobald wieder Speicherplatz in dem Mobilfunkgerät verfügbar ist, werden diese zwischengespeicherten Informationen an das Mobilfunkgerät weitergesendet.

Zum Anderen besteht aber auch nach einer Ausführungsform der vorliegenden Erfindung die Möglichkeit, dass das Mobilfunkgerät schon belegte Speicherbereiche zum Überschreiben mit empfangenen Informationen freigibt. Dies ist zum Beispiel denkbar für Speicherbereiche, welche mit weniger relevanten Informationen beschrieben sind. Der Nutzer hat dabei die Möglichkeit, zu definieren, welche Informationen er für weniger wichtig erachtet beziehungsweise welche entsprechenden Speicherbereiche zum Überschreiben mit wichtigeren Informationen freigegeben werden sollen.

In einer weiteren bevorzugten Ausführungsform der vorliegenden Erfindung weist das Übertragungsnetzwerk ein Speichermittel zum Zwischenspeichern von Daten auf, welche von dem Anwendungsrechner empfangenen wurden. Bei den Speichermitteln kann es sich um jede bekannte Art von Speichern handeln. Die Informationen des Push-Services werden von dem Anwendungsrechner an das Übertragungsnetzwerk weitergeleitet. Besteht kein unmittelbare Möglichkeit, die Informationen an das bestimmte Mobilfunkgerät weiterzuleiten, so werden die Informationen in dem Speichermittel zwischengespeichert. Auf diese Weise ist es immer möglich, Daten von dem Anwendungsrechner an das Übertragungsnetzwerk zu senden. Sobald das Mobilfunkgerät wieder empfangsbereit ist, werden die zwischengespeicherten Daten von dem Speichermittel an das Mobilfunkgerät weitergeleitet.

Das Weitersenden der zwischengespeicherten Daten hängt dabei von den von dem Mobilfunkgerät angezeigten Informationen ab. Zeigt das Mobilfunkgerät zum Beispiel dem Übertragungsnetzwerk an, dass momentan kein Speicher für den Empfang von Informationen bereitsteht, so speichert das Speichermittel die für das Mobilfunkgerät bestimmten Daten solange, bis das Mobilfunkgerät dem Übertragungsnetzwerk anzeigt, dass wieder ausreichend Speicherplatz für den Empfang der Daten zur Verfügung steht. Der Informationsaustausch erfolgt dabei über die Luftschnittstelle.

In einer weiteren bevorzugten Ausführungsform der vorliegenden Erfindung weist das Übertragungsnetzwerk einen Netzwerkrechner auf, welcher die Übertragung zum Mobilfunkgerät initiiert. Der Netzwerkrechner erhält von dem Mobilfunkgerät Informationen hinsichtlich dessen vorhandener Speicherkapazität. Die Initiierung einer Sendung durch den Netzwerkrechner erfolgt dabei in Abhängigkeit von dem von dem Mobilfunkgerät angezeigten Informationen. Der Netzwerkrechner führt folglich gewisse Steuerungsfunktionen in dem Übertragungssystem aus. Dem Netzwerkrechner ist bekannt, welche Daten in dem Speichermittel zwischengespeichert sind, beziehungsweise welche Datenübertragung zu dem Mobilfunkgerät noch nicht erfolgt ist.

Die Erfindung betrifft auch ein System zur Übertragung von nicht explizit angeforderten Daten in einem Mobilfunksystem, wobei das Mobilf-unksystem ein Anwendungsrechner, ein Übertragungsnetzwerk und ein Mobilfunkgerät aufweist, und das Mobilfunkgerät dem Übertragungsnetzwerk die Sendung der Daten betreffende Informationen mitteilt.

In einer bevorzugten Ausführungsform der vorliegenden Erfindung zeigen die Informationen des Mobilfunkgerätes dem Übertragungsnetzwerk an, wann die Daten an das Mobilfunkgerät gesendet werden sollen. Zu diesem Zweck wird dem Übertragungsnetzwerk ein Zeitfenster mitgeteilt, wann am Besten die Daten des Push-Services an das Mobilfunkgerät gesendet werden können. Dies hat den Hintergrund, dass der Nutzer beim Empfang der Push-Services nicht ständig gestört wird. Durch diese Vorgehensweise weiß der Nutzer immer genau, wann neue Push-Service-Daten eingehen können. Der Mobilfunkteilnehmer bestimmt dabei den Sendezeitpunkt durch Eingabe über sein Mobilfunkgerät. Denkbar ist aber auch, dass durch den Netzbetreiber der Sendezeitpunkt, z.B. abhängig von der Netzauslastung, festgelegt wird.

In einer weiteren bevorzugten Ausführungsform der vorliegenden Erfindung übermittelt das Mobilfunkgerät den Zeitpunkt des gewünschten Sendens der Daten an einen Netzwerkrechner, welcher entsprechend die Sendung initiiert.

In einer weiteren bevorzugten Ausführungsform der vorliegenden Erfindung zeigen die Informationen des Mobilfunkgeräts dem Übertragungsnetzwerk an, in welcher Reihenfolge die Daten an das Mobilfunkgerät gesendet werden sollen. Falls ein Nutzer mehrere Push-Services abonniert hat, so kann er jedem Push-Service eine bestimmte Wertzahl zuordnen. Beim Eingang mehrerer Push-Services werden die Daten entsprechend der Wertzahl, das heißt mit höherer oder niederer Priorität, an das Mobilfunkgerät gesendet. Dabei kann man zum Beispiel Börseninformationen eine höhere Priorität als Sportinformationen zuordnen. So wird eine neue Börseninformation schneller an den Nutzer weitergesendet, als eine neue Sportinformation. Denkbar ist aber auch, dass der Netzbetreiber die Wertzahlen vorgibt.

Entsprechendes gilt beim Einsatz eines Speichermittels zum Zwischenspeichern von Informationen, welche von dem Anwendungsrechner empfangenen wurden. Die Abarbeitung, d.h. die Weitersendung der zwischengespeicherten Informationen erfolgt auch wiederum basierend auf den dem abonnierten Push-Service zugeordneten Wertzahlen.

Die zwischengespeicherten Daten werden in Abhängigkeit von den von dem Mobilfunkgerät angezeigten Informationen weitergesendet. Der Nutzer bestimmt also, in welcher Weise er die Push-Services empfangen will.

Der Netzwerkrechner erhält die für die Zeit beziehungsweise Reihenfolge der Sendung relevanten Informationen von dem Mobilfunkgerät. Der Netzwerkrechner führt somit gewisse Steuerungsfunktionen in dem Übertragungssystem aus. Er initiiert zum Beispiel auch die Übertragungen von dem Übertragungsnetzwerk, d.h. dem Speichermittel, zu dem Mobilfunkgerät.

Die Erfindung wird im Folgenden unter Hinweis auf die beigefügten Zeichnungen anhand von Ausführungsbeispielen näher erläutert. Die dort dargestellten Merkmale und auch die bereits oben beschriebenen Merkmale können nicht nur in der genannten Kombination, sondern auch einzeln oder in anderen Kombinationen erfindungswesentlich sein. Es zeigen:
- Figur 1: eine schematische Darstellung eines Systems zur Übertragung von nicht explizit angeforderten Daten in einem Mobilfunksystem; und
- Figur 2: eine schematische Darstellung eines Systems zur Übertragung von nicht explizit angeforderten Daten in einem Mobilfunksystem bei von einer Wertzahl abhängiger Übertragung.

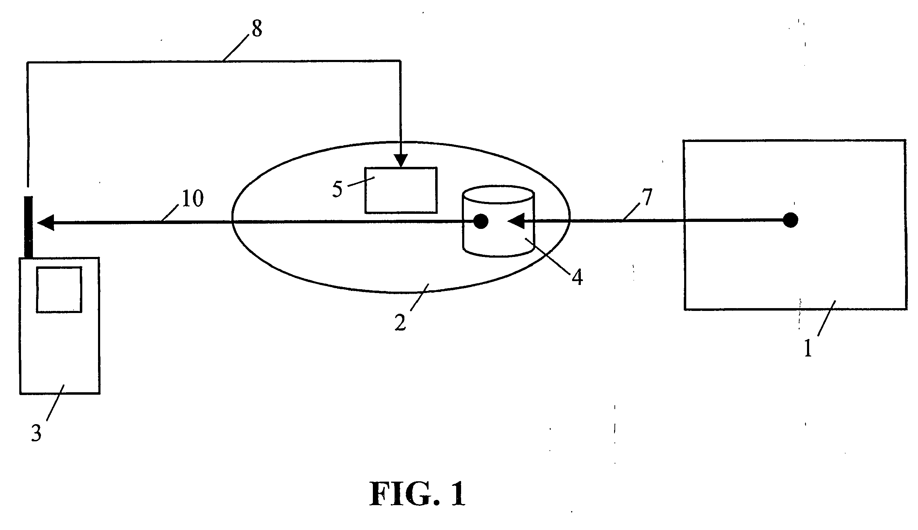

Figur 1 zeigt einen Anwendungsrechner 1, ein Übertragungsnetzwerk 2 mit einem Speichermittel 4 und einem Netzwerkrechner 5. Des Weiteren zeigt Figur 1 ein Mobilfunkgerät 3. Push-Service-Daten werden, wie durch den Pfeil 7 angedeutet, von dem Anwendungsrechner 1 an das Übertragungsnetzwerk 2 gesendet. Dort werden sie in dem Speichermittel 4 zwischengespeichert. Wie durch den Pfeil 8 ersichtlich, empfängt der Netzwerkrechner 5 von dem Mobilfunkgerät 3 Informationen hinsichtlich der verfügbaren Speicherkapazität in dem Mobilfunkendgerät. Abhängig von diesen Informationen werden die in dem Speichermittel 4 gespeicherten Daten, wie durch den Pfeil 10 dargestellt, an das Mobilfunkgerät 3 gesendet.

Sollte zum Beispiel eine große Anzahl von Informationen von dem Anwendungsrechner 1 an das Übertragungsnetzwerk 3 gesendet werden, wobei der Netzwerkrechner 5 von dem Mobilfunkgerät 3 erfahren hat, dass dieses momentan nicht genügend Speicherplatz zur Entgegennahme der Informationen des Anwendungsrechners 1 zur Verfügung steht, so werden die Daten in dem Speichermittel 4 zwischengespeichert. Sobald dem Mobilfunkgerät 3 wieder genügend Speicherplatz zur Verfügung steht, z.B. weil der Nutzer alte Informationen gelesen und danach gelöscht hat, so wird diese Information an den Netzwerkrechner 5 gesendet. Entsprechend initiiert der Netzwerkrechner eine Weiterleitung der in dem Speichermittel 4 zwischengespeicherten Informationen an das Mobilfunkgerät 3.

Darüber hinaus besteht auch die Möglichkeit, falls das Mobilfunkgerät 3 dem Netzwerkrechner 5 anzeigt, dass ihm nicht mehr genügend Speicherplatz für die Entgegennahme von neuen Informationen zur Verfügung steht, so kann es Speicherbereiche zum Überschreiben mit neu empfangenen Daten freigeben. Denkbar wäre dabei, dass von dem Nutzer bereits gelesene Informationen, welche dennoch im Mobilfunkgerät weiterhin gespeichert sind, überschrieben werden. Die Information, welche Speicherbereiche überschrieben werden können, werden nutzergesteuert an den Netzwerkrechner 5 weitergeleitet. Entsprechend initiiert der Netzwerkrechner 3 die weitere Übertragung.

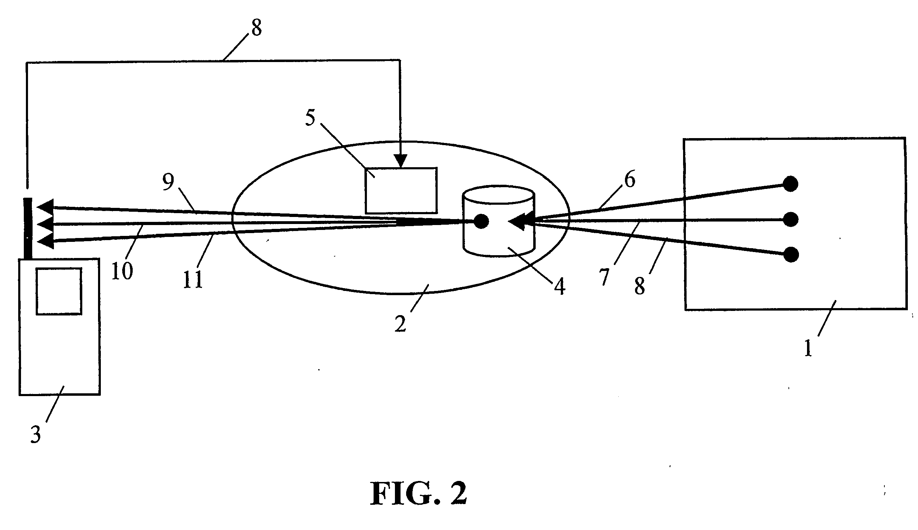

Figur 2 zeigt ein weiteres Ausführungsbeispiel des erfindungsgemäßen Systems zur Übertragung von nicht explizit angeforderten Daten in einem Mobilfunksystem. Die Elemente Anwendungsrechner, Übertragungssystem, Speichermittel, Netzwerkrechner und Mobilfunkgerät sind entsprechend, wie oben hinsichtlich der Figur 1 erläutert, in Figur 2 dargestellt. Die Pfeile 6,7,8 deuten an, dass Informationen von dem Anwendungsrechner 1 sequentiell in das Übertragunsnetzwerk 2, d.h. das Speichermittel 4, eingehen können.

In einem Ausführungsbeispiel werden in dem Speichermittel 4 zwischengespeicherten Daten von einem vorbestimmten Zeitpunkt ab sequentiell hintereinander an das Mobilfunkgerät 3 gesendet. Es erfolgt also eine Sendung des ersten Datenstroms 9, dann der Datenstrom 10 und schließlich der Datenstrom 11. Dabei gibt der Nutzer über das Mobilfunkgerät 3 die Zeitinformation dem Netzwerkrechner 5 vor, wann er die Daten des Push-Services zu empfangen wünscht.

In einem weiteren Ausführungsbeispiel werden Daten, welche unterschiedliche Push-Service-Themen betreffen, von dem Anwendungsrechner 1 an das Übertragungsnetzwerk 2 gesendet. Dabei werden zum Beispiel Staumeldungen zuerst über den Datenstrom 6 empfangen. Anschließend Wetternachrichten über den Datenstrom 7 und schließlich Politik-Nachrichten über den Datenstrom 8. Die Daten werden in dem Speichermittel 4 zwischengespeichert. Da für den Nutzer Wetterinformationen die höchste Priorität haben und für ihn auch die Politik-Nachrichten wichtiger als Staumeldungen sind, hat er entsprechend dem Netzwerkrechner 5 mitgeteilt, dass er bei zwischengespeicherten Informationen immer zuerst die Wetterinformationen, anschließend Politik-Nachrichten und schließlich Staumeldungen empfangen will. Entsprechend werden zuerst über den Datenstrom 9 Wetterinformationen, anschließend über den Datenstrom 10 Politik-Nachrichten und als Letztes über den Datenstrom 11 Staumeldungen von dem Speichermittel 4 an das Mobilfunkgerät 3 gesendet.

Es kann auch vorgesehen werden, dass diese Vorgehensweise nur bei durch Fehlen der Speicherkapazität in dem Mobilfunkgerät 3 bedingter Zwischenspeicherung angewendet wird. Darüber hinaus ist es auch denkbar, dass Push-Service-Informationen immer eine gewisse Zeitspanne zwischengespeichert werden, damit eine von der Wichtigkeit abhängige Selektion stattfinden kann. Entsprechend ist auch eine Kombination mit einer zeitabhängigen Sendung möglich.

## Patentansprüche

1. System zur Übertragung von nicht explizit angeforderten Daten in einem Mobilfunksystem, aufweisend:
- einen Anwendungsrechner (1),
- ein Übertragungsnetzwerk (2), und
- ein Mobilfunkgerät (3),
**dadurch gekennzeichnet,**
**dass** das Mobilfunkgerät angepaßt ist, dem Übertragungsnetzwerk anzuzeigen, wie viel Speicherplatz in dem Mobilfunkgerät zur Speicherung der Daten noch zur Verfügung steht und das Mobilfunkgerät angepaßt ist, Speicherbereiche zum Überschreiben mit empfangenen Daten freizugeben.

2. System nach Anspruch 1,
**dadurch gekennzeichnet, dass** das Mobilfunkgerät angepaßt ist, dem Übertragungsnetzwerk anzuzeigen, wenn kein Speicherplatz für Daten in dem Mobilfunkgerät zur Verfügung steht.

3. System nach einem der vorhergehenden Ansprüche,
**dadurch gekennzeichnet,**
**dass** das Übertragungsnetzwerk ein Speichermittel (4) zum Zwischenspeichern von von dem Anwendungsrechner empfangenen Daten aufweist.

4. System nach Anspruch 3,
**dadurch gekennzeichnet,**
**dass** das Übertragungsnetzwerk angepaßt ist, die zwischengespeicherten Daten in Abhängigkeit von den von dem Mobilfunkgerät angezeigten Informationen weiterzusenden.

5. System nach einem der vorhergehenden Ansprüche,
**dadurch gekennzeichnet,**
**dass** das Übertragungsnetzwerk einen Netzwerkrechner (5) aufweist, welcher angepaßt ist, die Übertragung zum Mobilfunkgerät zu initiieren.

6. System nach Anspruch 5,
**dadurch gekennzeichnet,**
**dass** die Initiierung in Abhängigkeit von den von dem Mobilfunkgerät angezeigten Informationen erfolgt.

7. Verfahren zur Übertragung von nicht explizit angeforderten Daten in einem Mobilfunksystem mit einem Anwendungsrechner (1), einem Übertragungsnetzwerk (2), und einem Mobilfunkgerät (3),
**dadurch gekennzeichnet,**
**dass** das Mobilfunkgerät dem Übertragungsnetzwerk anzeigt, wie viel Speicherplatz in dem Mobilfunkgerät zur Speicherung der Daten noch zur Verfügung steht und das Mobilfunkgerät Speicherbereiche zum Überschreiben mit empfangenen Daten freigibt.

8. Verfahren nach Anspruch 7,
**dadurch gekennzeichnet,**
**dass** das Mobilfunkgerät dem Übertragungsnetzwerk anzeigt, wenn kein Speicherplatz für Daten in dem Mobilfunkgerät zur Verfügung steht.

9. Verfahren nach einem der Ansprüche 7 oder 8,
**dadurch gekennzeichnet,**
**dass** das Übertragungsnetzwerk ein Speichermittel (4) zum Zwischenspeichern von von dem Anwendungsrechner empfangenen Daten aufweist.

10. Verfahren nach Anspruch 9,
**dadurch gekennzeichnet,**
**dass** die zwischengespeicherten Daten in Abhängigkeit von den von dem Mobilfunkgerät angezeigten Informationen weitergesendet werden.

11. Verfahren nach einem der Ansprüche 7 bis 10,
**dadurch gekennzeichnet,**
**dass** das Übertragungsnetzwerk einen Netzwerkrechner (5) aufweist, welcher die Übertragung zum Mobilfunkgerät initiiert.

12. Verfahren nach Anspruch 11,
**dadurch gekennzeichnet,**
**dass** die Initiierung in Abhängigkeit von den von dem Mobilfunkgerät angezeigten Informationen erfolgt.

## Claims

1. System for transmitting data that has not been explicitly requested in a mobile radio system, having:
- an application computer (1),
- a transmission network (2) and
- a mobile radio unit (3),
**characterised in that**
the mobile radio unit is adapted to indicate to the transmission network how much storage space is still available in the mobile radio unit for storing data and that the mobile radio unit is adapted to release storage areas for overwriting with received data.

2. System according to claim 1,
**characterised in that**
the mobile radio unit is adapted to indicate to the transmission network when no storage space for data is available in the mobile radio unit.

3. System according to one of the preceding claims,
**characterised in that**
the transmission network has a storage means (4) for buffering data received from the application computer.

4. System according to claim 3,
**characterised in that**
the transmission network is adapted to forward the buffered data based on the information indicated by the mobile radio unit.

5. System according to one of the preceding claims,
**characterised in that**
the transmission network has a network computer (5) which is adapted to initiate the transmission to the mobile radio unit.

6. System according to claim 5,
**characterised in that**
the initiation is performed based on the information indicated by the mobile radio unit.

7. Method for transmitting data that has not been explicitly requested in a mobile radio system having an application computer (1), a transmission network (2) and a mobile radio unit (3),
**characterised in that**
the mobile radio unit indicates to the transmission network how much storage space is still available in the mobile radio unit for storing data and that the mobile radio unit releases storage areas for overwriting with received data.

8. Method according to claim 7,
**characterised in that**
the mobile radio unit indicates to the transmission network when no storage space for data is available in the mobile radio unit.

9. Method according to one of claims 7 or 8,
**characterised in that**
the transmission network has a storage means (4) for buffering data received from the application computer.

10. Method according to claim 9,
**characterised in that**
the buffered data is forwarded based on the information indicated by the mobile radio unit.

11. Method according to one of claims 7 to 10,
**characterised in that**
the transmission network has a network computer (5) which initiates the transmission to the mobile radio unit.

12. Method according to claim 11,
**characterised in that**
the initiation is performed based on the information indicated by the mobile radio unit.

## Revendications

1. Système de transmission de données non explicitement demandées dans un système de radiotéléphonie mobile, présentant :
- un ordinateur d'application (1),
- un réseau de transmission (2), et
- un appareil radiotéléphonique mobile (3),
**caractérisé en ce**
**que** l'appareil radiotéléphonique mobile est apte à indiquer au réseau de transmission combien d'espace mémoire est encore disponible dans l'appareil radiotéléphonique mobile pour la mémorisation des données et en ce que l'appareil radiotéléphonique mobile est apte à libérer des zones de mémoire pour y enregistrer par écrasement les données reçues.

2. Système selon la revendication 1,
**caractérisé en ce**
**que** l'appareil radiotéléphonique mobile est apte à indiquer au réseau de transmission lorsqu'aucun espace mémoire n'est disponible dans l'appareil radiotéléphonique mobile pour des données.

3. Système selon l'une quelconque des revendications précédentes,
**caractérisé en ce**
**que** le réseau de transmission présente un moyen de mémoire (4) pour la mémorisation temporaire de données reçues de la part de l'ordinateur d'application.

4. Système selon la revendication 3,
**caractérisé en ce**
**que** le réseau de transmission est apte à transférer les données mémorisées temporairement en fonction des informations indiquées par l'appareil radiotéléphonique mobile.

5. Système selon l'une quelconque des revendications précédentes,
**caractérisé en ce**
**que** le réseau de transmission présente un ordinateur de réseau (5) lequel est apte à initier la transmission vers l'appareil radiotéléphonique mobile.

6. Système selon la revendication 5,
**caractérisé en ce**
**que** l'initiation est réalisée en fonction des informations indiquées par l'appareil radiotéléphonique mobile.

7. Procédé de transmission de données non explicitement demandées dans un système de radiotéléphonie mobile, comprenant un ordinateur d'application (1), un réseau de transmission (2) et un appareil radiotéléphonique mobile (3),
**caractérisé en ce**
**que** l'appareil radiotéléphonique mobile indique au réseau de transmission combien d'espace mémoire est encore disponible dans l'appareil radiotéléphonique mobile pour la mémorisation des données et en ce que l'appareil radiotéléphonique mobile libère des zones de mémoire pour y enregistrer par écrasement des données reçues.

8. Procédé selon la revendication 7,
**caractérisé en ce**
**que** l'appareil radiotéléphonique mobile indique au réseau de transmission lorsqu'aucun espace mémoire n'est disponible dans l'appareil radiotéléphonique mobile pour des données.

9. Procédé selon l'une quelconque des revendications 7 ou 8,
**caractérisé en ce**
**que** le réseau de transmission présente un moyen de mémoire (4) pour la mémorisation temporaire de données reçues de la part de l'ordinateur d'application.

10. Procédé selon la revendication 9,
**caractérisé en ce**
**que** les données mémorisées temporairement sont transférées en fonction des informations indiquées par l'appareil radiotéléphonique mobile.

11. Procédé selon l'une quelconque des revendications 7 à 10,
**caractérisé en ce**
**que** le réseau de transmission présente un ordinateur de réseau (5) lequel initie la transmission vers l'appareil radiotéléphonique mobile.

12. Procédé selon la revendication 11,
**caractérisé en ce**
**que** l'initiation est réalisée en fonction des informations indiquées par l'appareil radiotéléphonique mobile.
